# EUROPEAN PATENT SPECIFICATION

(11) **EP 1 272 565 B1**
(45) Date of publication and mention of the grant of the patent: **22.09.2004**
(21) Application number: 01934217.9
(22) Date of filing: 28.03.2001
(51) Int. Cl.: C08L 101/00, C08L 69/00, C08L 83/04

(54) **FLAME-RETARDANT RESIN MOLDING**
FLAMMHEMMENDES KUNSTSTOFF-FORMTEIL
MOULAGE DE RESINE IGNIFUGE

(30) Priority: 31.03.2000 JP 2000099637; 07.04.2000 JP 2000107153; 26.03.2001 US 817497
(43) Date of publication of application: 08.01.2003
(73) Proprietor: GENERAL ELECTRIC COMPANY, Schenectady, NY 12345 (US)
(72) Inventor: Saito, Akihiro, c/o Technology Center, Mooka-shi, Ibaraki-ken (JP); Ishida, Hiromi, c/o GE Toshiba Silicones Co., Ltd., Tokyo (JP); Takezawa, Yoshiaki, GE Toshiba Silicones Co., Ltd., Tokyo (JP); Horie, Yutaka GE Plastics, Japan, Ltd., Mooka-shi, Ibaraki-ken, Tokyo (JP)
(74) Representative: Szary, Anne Catherine, Dr.
(86) International application number: PCT/IB2001/000674
(87) International publication number: WO 2001/072905

(56) References cited:
- EP-A- 1 026 204
- EP-A- 1 094 093
- WO-A-01/38438
- WO-A-99/28387
- US-A- 3 742 085
- IJI, M. ET AL: "SILICONE DERIVATIVES AS NEW FLAME RETARDANTS FOR AROMATIC THERMOPLASTICS USED IN ELECTRONIC DEVICES" POLYMERS FOR ADVANCED TECHNOLOGIES, JOHN WILEY AND SONS, CHICHESTER, GB, vol. 9, no. 10/11, 1 October 1998 (1998-10-01), pages 593-600, XP000784413 ISSN: 1042-7147
- IJI, M. ET AL.: RECENT ADV. FLAME RETARD. POLYM. MATER., vol. 10, 1999, pages 222-227, XP001051335
- DATABASE CA [Online] CHEMICAL ABSTRACTS SERVICE, COLUMBUS, OHIO, US; retrieved from STN Database accession no. 132:50713/DN, HCAPLUS XP002186218 & JP 11 349798 A (KANEGAFUCHI CHEMICAL INDUSTRY CO.) 21 December 1999 (1999-12-21)
- DATABASE WPI Section Ch, Week 200012 Derwent Publications Ltd., London, GB; Class A23, AN 2000-130609 XP002186219 & JP 2000 001609 A (KANEKA CORP), 7 January 2000 (2000-01-07)

## Description

### BACKGROUND OF THE INVENTION

### 1. Field of the Invention

The present invention relates to a flame-retardant resin composition containing a polycarbonate-based resin, and more particularly to a flame-retardant resin molding suitable for use in the housings and components of television sets, printers, copiers, facsimile machines, personal computers, and other types of consumer electronics and OA equipment, as well as in transformers, coils, switches; connectors, battery packs, liquid crystal reflectors, automotive parts, construction materials, and other applications with stringent flame retardancy requirements.

### 2. Brief Description of the Related Art

Stringent flame retardancy requirements are envisioned for the housings and components of television sets, printers, and other types of consumer electronics and OA equipment; transformers, coils, and other components; and construction materials and other moldings.

In particular, exterior components of personal computers and other devices must comply with UL₉₄V, which is a standard for high flame retardancy and impact resistance. Polycarbonate resins are currently used for such high flame-retardant moldings.

Polycarbonates are self-extinguishing, highly flame-retardant plastic materials, but they still have shortcomings in terms of flame retardancy, and adding halogen-based compounds have therefore been attempted. There is, however, concern that adding such halogen-based compounds will produce halogen-containing gases during burning. Together with environmental considerations, such concerns create a need for using flame retardants devoid of halogens such as chlorine and bromine.

Phosphate esters and silicone resins are known as such halogen-free flame retardants. For example, it is proposed in JP (Kokoku) 62-25706 to add a phosphate ester in order to improve the flame retardancy of a polycarbonate-based resin. However, adding a phosphate ester to a polycarbonate-based resin has the drawback of bringing about a reduction in heat resistance or impact resistance when a molding is produced.

By contrast, silicone resins have high heat resistance and remain highly safe without generating noxious gases during burning. For this reason, silicone resins are used as the flame retardants for polycarbonate-based resins.

"Silicone derivatives as new flame retardants for aromatic thermoplastics used in electronic devices", Masato Iji and Shin Serizawa, Polymers for Advanced Technologies, published by John Wiley and Sons, Chichester, GB, Vol. 9, No. 10/22,1 October 1998, pages 593-600, XP000784413 ISSN: 1042-7147, discloses silicone derivatives that generate no toxic gas during combustion, developed for use as flame retardants in the aromatic thermoplastics (polycarbonate, acrylonitrile-butadiene-styrene and polystyrene) used in many electronic devices. A special silicone with a branched chain structure, a phenyl-rich mixture of phenyl and methyl groups in the chain and methyl groups at the chain terminals was found to be effective in retarding the combustion of these plastics, and particularly so for polycarbonate and its derivatives. These silicone derivatives have shown themselves to be a perfect replacement for halogen compounds, which have been claimed to have a potential environmental hazard when the materials are subjected to combustion. Further, adding these silicone derivatives to polycarbonate does not adversely affect other important properties, such as strength, moldability and heat resistance; impact strength is in fact better than that of polycarbonate containing a bromine compound as a flame retardant

However, further improvements are needed regarding the flame retardancy of flame-retardant resin moldings containing silicone resins as flame retardants.

As a result of thoroughgoing research conducted in view of the above-described situation and aimed at developing moldings with improved flame retardancy, the inventors perfected the present invention upon discovering that a molding with exceptionally high flame retardancy can be obtained if a silicone resin is dispersed as flat particles on the surface of the molding.

### BRIEF SUMMARY OF THE INVENTION

An object of the present invention is to provide a flame-retardant resin molding that has high heat resistance and excellent impact resistance and flame retardancy. Another object of the present invention is to provide components and housings for electrical/electronic equipment that have high heat resistance and excellent impact resistance and flame retardancy.

The flame-retardant resin molding pertaining to the present invention is composed of a flame-retardant resin composition containing thermoplastic resin (A) and silicone resin (B), wherein this molding is characterized in that the silicone resin (B) is dispersed as flat particles at least in the area near the surface of the molding, and the thickness of the flat particles along the minor axes thereof is 1-100 nm.

The ratio of length along the major axis and length along the minor axis of the flat particles is 5 or greater.

Thermoplastic resin (A) should preferably be a polycarbonate-based resin.

The flame-retardant resin molding should preferably be composed of a flame-retardant resin composition containing drip inhibitor (C) together with thermoplastic resin (A) and silicone resin (B).

The drip inhibitor (C) should preferably be polytetrafluoroethylene (PTFE).

The ends of the silicone resin should preferably be blocked with the constituent units expressed by the following formula. 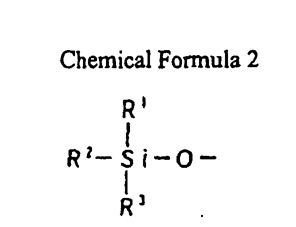 (where R¹-R³, which may be mutually identical or different, are alkyl, aryl, or alkylaryl groups).

The electrical/electronic device component pertaining to the present invention is characterized by being composed of the flame-retardant resin molding described above.

The housing pertaining to the present invention is characterized by being composed of the flame-retardant resin molding described above.

### BRIEF DESCRIPTION OF THE DRAWINGS

Figure 1 consists of TEM photographs of cross sections of the flame-retardant resin molding (Working Example 1) pertaining to the present invention.
Figure 2 is a diagram illustrating the definition of the ratio of length along the major axis and length along the minor axis for the silicone resin in the present invention.
Figure 3 consists of TEM photographs of cross sections of a molding obtained using a silicone resin having Si-OH groups (Comparative Example 1).

### DETAILED DESCRIPTION OF THE INVENTION

The flame-retardant resin molding of the present invention will now be described.

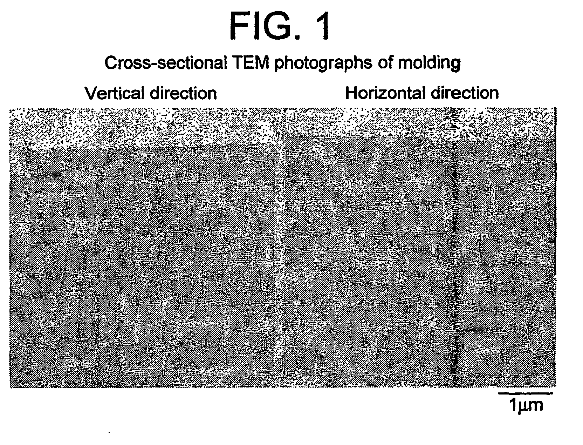

The flame-retardant resin molding pertaining to the present invention is a molding composed of a flame-retardant resin composition containing thermoplastic resin (A) and silicome resin (B), with silicone resin (B) dispersed as flat particles at least in the area near the surface of the molding, as shown in Fig. 1. Fig. 1 shows TEM photographs of cross sections of the flame-retardant resin composition pertaining to the present invention. In conventional practice, silicone resins are dispersed in resin moldings as particles whose shape depends on the resin type, but the inventors have discovered that highly flame-retardant moldings can be obtained if the silicone resins are dispersed as specific flat particles at least in the vicinity of the molding surface.

Measured in the direction of their minor axes, the thickness of the flat particles composed of such a silicone resin should be 1-100 nm, and preferably 5-80 nm. Specific examples of such flat particles include bar-shaped particles and flat-plate particles.

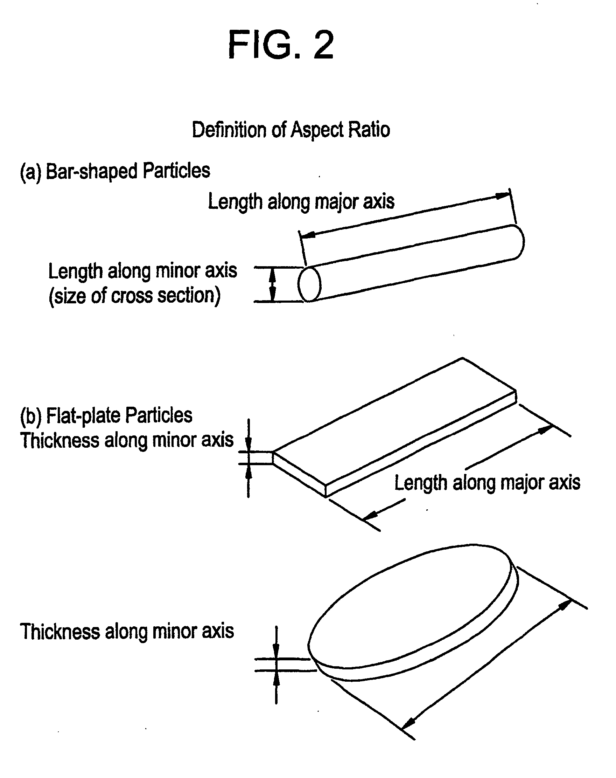

The ratio of length along the major axis and length along the minor axis of the flat particles should be 5 or greater, and preferably 10 or greater. The ratio of length along the major axis and length along the minor axis of the flat particles corresponds to particle length divided by particle cross-sectional size when the particles have a bar shape, and to maximum particle length divided by particle thickness when the particles are shaped as flat plates, as shown in Fig. 2.

In the flame-retardant resin composition pertaining to the present invention, the silicone resin should be dispersed as flat particles at least in the area near the surface (to a depth of 5 micrometers from the surface) of the molding. For this reason, the silicone resin can be uniformly dispersed as flat particles throughout the entire molding, or the silicone resin can be dispersed as particles other than flat particles inside the molding. Alternatively, the entire silicone resin may be dispersed as flat particles on the molding surface, or the resin may be partially dispersed in a configuration other than flat particles. Examples of such nonflat particles include particles shaped as spheres and blocks.

A molding of exceptional flame retardancy can be obtained when a silicone resin is dispersed as flat particles in the area near the surface of the flame-retardant resin molding in the above-described manner.

For example, when the flame-retardant resin molding pertaining to the present invention was tested in accordance with the method described in Bulletin 94 "Combustion Testing for Classification of Materials" (hereinafter referred to as "UL-94") of the Underwriters Laboratories Inc., specimens with a thickness of 1.59 mm (1/16 inch)were fabricated using this molding, and these specimens were subjected to UL-94V flammability testing and found to have the UL-94 V-0 rating. Following is a brief description of the UL-94 V classifications.

V-0: When a flame is applied twice to each specimen, the combined burning time of five ignited specimens (ten flame applications) is within 50 seconds, the burning time following a single flame application is within 10 seconds, and none of the specimens drip flaming particles capable of igniting degreased cotton.

V-1: The combined burning time of five ignited specimens (ten flame applications) is within 250 seconds, the burning time following a single flame application is within 30 seconds, and none of the specimens drip flaming particles capable of igniting degreased cotton.

V-2: The combined burning time of five ignited specimens (ten flame applications) is within 250 seconds, the burning time following a single flame application is within 30 seconds, and all the specimens drip flaming particles capable of igniting degreased cotton.

The flame-retardant resin molding has excellent flame retardancy and high impact resistance and heat resistance. The molding pertaining to the present invention is therefore suitable for electronic/electrical device components and the shells and housings of OA equipment and consumer electronics.

### Flame Retardant Resin Composition

Such a flame-retardant resin molding is composed of a flame-retardant resin composition containing thermoplastic resin (A), silicone resin (B), and an optional drip inhibitor (C).

Thermoplastic resin (A) is not subject to any particular limitations and can be any conventional thermoplastic resin. Specific examples include polycarbonate-based resins, polyester-based resins, polyphenylene oxide-based resins, polyamide-based resins, polyetherimide-based resins, polyimide-based resins, polyolefin-based resins, styrene-based resins, aromatic vinyl/diene/vinyl cyanide-based copolymers, acrylic resins, polyester carbonate-based resins, and other materials. Two or more of these resins may also be combined together.

Of these, polycarbonate-based resins are preferred.

### Polycarbonate-based resin (A-1)

The polycarbonate-based resin (A-1) used in the present invention is an aromatic homopolycarbonate or aromatic copolycarbonate obtained by reaction of an aromatic dihydroxy compound and a carbonate precursor.

A polycarbonate-based resin commonly contains the repeating constituent units expressed by formula (1) below. 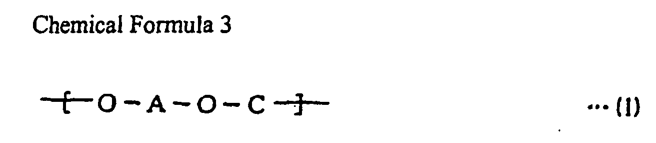 (where A is a divalent residue derived from an aromatic dihydroxy compound).

The aromatic dihydroxy compound may be a mononuclear or polynuclear aromatic compound containing two hydroxy groups (functional groups), with either hydroxy group directly bonded to a carbon atom on the aromatic nucleus.

Bisphenol compounds expressed by formula (2) below can be cited as specific examples of such aromatic dihydroxy compounds. 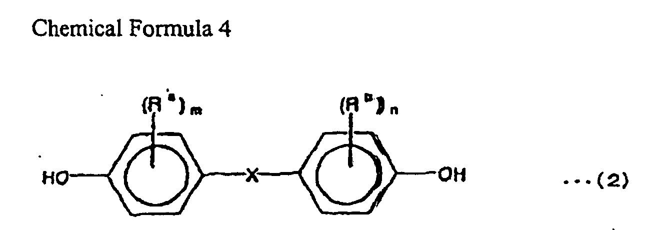 (where R^{a} and R^{b}, which may be the same or different, are halogen atoms or monovalent hydrocarbon groups; *m* and *n* are integers from o to 4; X is 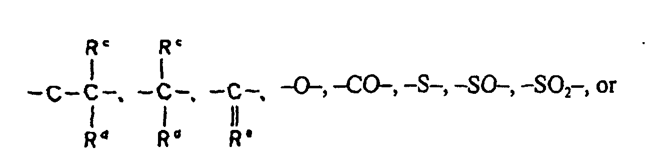 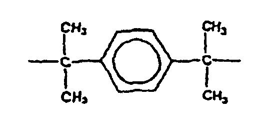 R^{c} and R^{d} are hydrogen atoms or monovalent hydrocarbon groups, with an option of cyclic structures being formed by the R^{c} and R^{d}; and R^{e} is a divalent hydrocarbon group).

Specific examples of aromatic dihydroxy compounds expressed by formula (2) include, but are not limited to, bis(4-hydroxyphenyl)methane, 1,1-bis(4-hydroxyphenyl)ethane, 2,2-bis(4-hydroxyphenyl)propane (so-called bisphenol A), 2,2-bis(4-hydroxyphenyl)butane, 2,2-bis(4-hydroxyphenyl)octane, bis(4-hydroxyphenyl)phenylmethane, 2,2-bis(4-hydroxy-1-methylphenyl)propane, 1,1-bis(4-hydroxy-*t*-butylphenyl)pyopane, 2,2-bis(4-hydroxy-3-bromophenyl)propane, 2,2-(4-hydroxy-3,5-dibromophenyl)propane, and other bis(hydroxyaryl)alkanes; 1,1-bis(4-hydroxyphenyl)cyclopentane, 1,1-(4-hydroxyphenyl)cyclohexane, and other bis(hydroxyaryl)cycloalkanes; 4,4'-dihydroxydiphenyl ether, 4,4'-dihydroxy-3,3'-dimethylphenyl ether, and other dihydroxyaryl ethers; 4,4'-dihydroxydiphenyl sulfide, 4,4'-dihydroxy-3,3'-dimethylphenyl sulfide, and other dihydroxydiaryl sulfides; 4,4'-dihydroxydiphenyl sulfoxide, 4,4'-dihydroxy-3,3'-dimethyldiphenyl sulfoxide, and other dihydroxydiaryl sulfoxides; and 4,4'-dihydroxydiphenyl sulfone, 4,4'-dihydroxy-3,3'-dimethyldiphenyl sulfone, and other dihydroxydiaryl sulfones.

Of these aromatic dihydroxy compounds, 2,2-bis(4-hydroxyphenyl)propane (bisphenol A) is particularly preferred.

Aromatic dihydroxy compounds expressed by formula (3) below can also be used as compounds other than the aromatic dihydroxy compounds expressed by formula (2) above. 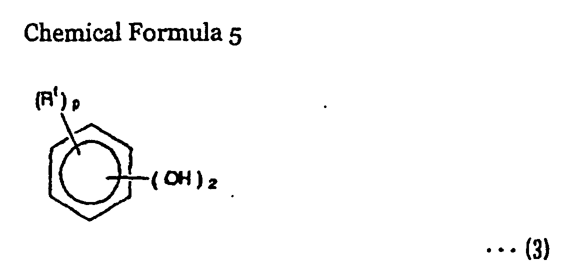 (where R^{f}'s are each independently a C₁-C₁₀ hydrocarbon group, a halogenated hydrocarbon group obtained by substituting one or more such hydrocarbon groups with halogen atoms, or a halogen atom; and *p* is an integer from 0 to 4).

Examples of such compounds include resorcin; 3-methyl resorcin, 3-ethyl resorcin, 3-propyl resorcin, 3-butyl resorcin, 3-*t*-butyl resorcin, 3-phenyl resorcin, 3-cumyl resorcin, 2,3,4,6-tetrafluororesorcin, 2,3,4,6-tetrabromoresorcin, and other substituted resorcins; catechol; hydroquinone; and 3-methyl hydroquinone, 3-ethyl hydroquinone, 3-propyl hydroquinone, 3-butyl hydroquinone, 3-*t*-butyl hydroquinone, 3-phenyl hydroquinone, 3-cumyl hydroquinone, 2,3,5,6-tetramethyl hydroquinone, 2,3,5,6-tetra-*t*-butyl hydroquinone, 2,3,5,6-tetrafluorohydroquinone, 2,3,5,6-tetrabromohydroquinone, and other substituted hydroquinones.

Aromatic dihydroxy compounds other than those expressed by formula (2) above can also be used. One of these compounds, expressed by the formula 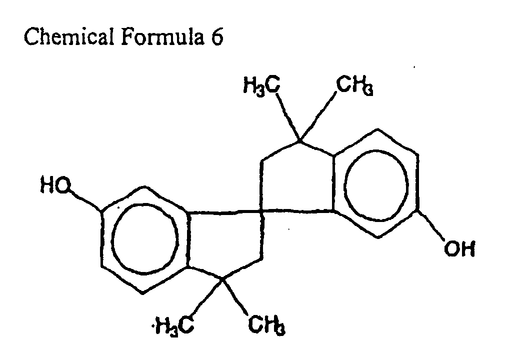 is 2,2,2',2'-tetrahydro-3,3,3',3'-tetramethyl-1,1'-spirobi-[1H-indene]-7,7'-diol.

These aromatic dihydroxy compounds can be used singly or as combinations of two or more compounds.

The polycarbonate may be a linear or branched compound. A blend of linear and branched polycarbonates may also be used.

Such branched polycarbonates can be obtained by reacting polyfunctional aromatic compounds with aromatic dihydroxy compounds and carbonate precursors. Typical examples of such polyfunctional aromatic compounds are described in US Patents 3,028,385, 3,334,154, 4,001,124, and 4,131,576. Specific examples include 1,1,1-tris(4-hydroxyphenyl)ethane, 2,2',2"-tris(4-hydroxyphenyl)diisopropylbenzene, *a*-methyl*-a,a',a* '-tris(4-hydroxyphenyl)-1,4-diethylbenzene, *a,a',a"*-tris(4-hydroxyphenyl)-1,3,5-triisopropylbenzene, chloroglycine, 4,6-dimethyl-2,4,6-tri(4-hydroxyphenyl)-heptane-2, 1,3,5-tri(4-hydroxyphenyl)benzene, 2,2-bis-[4,4-(4,4'-dihydroxyphenyl)-cyclohexyl]-propane, trimellitic acid, 1,3,5-benzenetricarboxylic acid, and pyromellitic acid. Of these, 1,1,1-tris(4-hydroxyphenyl)ethane and *a,a',a"*-tris(4-hydroxyphenyl)-1,3,5-triisopropylbenzene are preferred.

As measured at 25°C in methylene chloride, the intrinsic viscosity of the polycarbonate-based resin is not subject to any particular limitations and can be appropriately selected with consideration for the intended application and molding properties. The viscosity is commonly 0.26 dL/g or greater, preferably 0.30-0.98 dL/g, and ideally 0.34-0.64 dL/g. Calculated in terms of viscosity-average molecular weight, the viscosity is commonly 10,000 or greater, preferably 12,000-50,000, and ideally 14,000-30,000. It is also possible to use a mixture of polycarbonate resins having a plurality of different intrinsic viscosities.

The polycarbonate-based resin used in the present invention can be produced by a conventional method. Examples include
(1) A method (melt method) in which an aromatic dihydroxy compound and a carbonate precursor (for example, a carbonate diester) are subjected to ester interchange in a molten state, and a polycarbonate is synthesized, and
(2) A method (interface method) in which an aromatic dihydroxy compound and a carbonate precursor (for example, phosgene) are allowed to react in a solution.

These production methods are described, for example, in JP (Kokai) 2-175723 and 2-124934, and in US Patents 4,001,184, 4,238,569, 4,238,597, and 4,474,999.

### Melt Method

Examples of carbonate diesters that can be used in method (1) (melt method) include diphenyl carbonate, bis(chlorophenyl)carbonate, bis(2,4-dichlorophenyl)carbonate, bis(2,4,6-trichlorophenyl)carbonate, bis(2-cyanophenyl)carbonate, bis(*o*-nitrophenyl)carbonate, ditolyl carbonate, *m*-cresyl carbonate, dinaphthyl carbonate, bis(diphenyl)carbonate, diethyl carbonate, dimethyl carbonate, dibutyl carbonate, and dicyclohexyl carbonate. Of these, diphenyl carbonate is preferred for use. Two or more of these can be used jointly. Diphenyl carbonate is particularly preferred for such joint use. The carbonate diesters may contain dicarboxylic acids or dicarboxylate esters. Specifically, the carbonate diesters may contain dicarboxylic acids or dicarboxylate esters in an amount of 50 mol% or less, and preferably 30 mol% or less.

Examples of such dicarboxylic acids or dicarboxylate esters include isophthalic acid, sebacic acid, decanedioic acid, dodecanedioic acid, diphenyl sebacate, diphenyl terephthalate, diphenyl isophthalate, diphenyl decanedioate, and diphenyl dodecanedioate. The carbonate diesters may contain two or more such dicarboxylic acids or dicarboxylate esters.

A polycarbonate can be obtained by the polycondensation of a carbonate diester and an aromatic dihydroxy compound. To yield a polycarbonate, the carbonate diester should be used in an amount of 0.95-1.30 moles, and preferably 1.01-1.20 moles, per mole of the combined amount of aromatic dihydroxy compounds.

A compound described, for example, in JP (Kokai) 4-175368, which is an application previously filed by the present applicants, can be used as a catalyst for such a melt method.

Specifically, an alkali metal compound and/or alkaline-earth metal compound (a) (hereinafter referred to as "alkali (earth) metal compound (a)") is commonly used as a melt polycondensation catalyst.

Organic acid salts, inorganic acid salts, oxides, hydroxides, hydrides, alcoholates, and other compounds of alkali metals or alkaline-earth metals should preferably be used as alkali (earth) metal compounds (a).

Specific examples of alkali metal compounds include sodium hydroxide, potassium hydroxide, lithium hydroxide, sodium hydrogen carbonate, potassium hydrogen carbonate, lithium hydrogen carbonate, sodium carbonate, potassium carbonate, lithium carbonate, sodium acetate, potassium acetate, lithium acetate, sodium stearate, potassium stearate, lithium stearate, sodium boron hydride, lithium boron hydride, sodium boron phenylide, sodium benzoate, potassium benzoate, lithium benzoate, disodium hydrogen phosphate, dipotassium hydrogen phosphate, and dilithium hydrogen phosphate, as well as disodium, dipotassium, and dilithium salts of bisphenol A, and sodium, potassium, and lithium salts of phenols.

Examples of alkaline-earth metal compounds include calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate. Two or more of these compounds can also be used together.

Such alkali (earth) metal compounds should be added during melt polycondensation in an amount of 1 × 10⁻⁸ to 1 × 10⁻³ mol, preferably 1 × 10⁻⁷ to 2 × 10⁻⁶ mol, and ideally 1 × 10⁻⁷ to 8 × 10⁻⁷ mol, per mole of the bisphenols used. When an alkali (earth) metal compound is added to the bisphenol (which is used as a starting material of the melt polycondensation reaction), the addition should be controlled such that the amount, per mole bisphenol, in which the alkali (earth) metal compound is present during the melt polycondensation reaction falls within the aforementioned range.

Basic compound (b) may be used together with the alkali (earth) metal compound (a) as a melt polycondensation catalyst.

The basic compound (b) may be a nitrogen-containing basic compound readily decomposable or vaporizable at high temperatures. The following compounds can be cited as specific examples.

Tetramethylammonium hydroxide (Me₄NOH), tetraethylammonium hydroxide (Et₄NOH), tetrabutylammonium hydroxide (Bu₄NOH), trimethylbenzylammonium hydroxide (φ-CH₂(Me)₃NOH), and other ammonium hydroxides having groups such as alkyls, aryls, and alkylaryls;
trimethylamine, triethylamine, dimethylbenzylamine, triphenylamine, and other tertiary amines;
secondary amines of the formula R₂NH (where R is a methyl, ethyl, or other alkyl group; a phenyl, tolyl, or other aryl group);
primary amines of the formula RNH₂ (where R is the same as above);
4-dimethylaminopyridine, 4-diethylaminopyridine, 4-pyrrolidinopyridine, and other pyridines;
2-methylimidazole, 2-phenylimidazole, and other imidazoles; and
ammonia, tetramethylammonium borohydride (Me₄NBH₄), tetrabutylammonium borohydride (Bu₄NBH₄), tetrabutylammonium tetraphenyl borate (Bu₄NBPh₄), tetramethylammonium tetraphenyl borate (Me₄NBPh₄), and other basic salts.

Of these, tetraalkylammonium hydroxides are preferred for use.

The nitrogen-containing basic compound (b) should be used in an amount of 1 × 10⁻⁶ to 1 × 10⁻¹ mol, and preferably 1 × 10⁻⁵ to 1 × 10⁻² mol, per mole bisphenol.

A boric acid compound (c) can be used as an additional catalyst.

Boric acid and borate esters can be cited as examples of such boric acid compound (c).

The borate esters expressed by the following general formula can be cited as examples of such borate esters.

B(OR)ₙ(OH)₃₋ₙ,

where R is an alkyl such as methyl or ethyl, or an aryl such as phenyl; and n is 1, 2, or 3.

Specific examples of such borate esters include trimethyl borate, triethyl borate, tributyl borate, trihexyl borate, triheptyl borate, triphenyl borate, tritolyl borate, and trinaphthyl borate.

The boric acid or borate ester (c) should be used in an amount of 1 × 10⁻⁸ to 1 × 10⁻¹ mol, preferably 1 × 10⁻⁷ to 1 × 10⁻² mol, and ideally 1 × 10⁻⁶ to 1 × 10⁻⁴ mol, per mole bisphenol.

Examples of suitable melt polycondensation catalysts include combinations of alkali (earth) metal compound (a) and nitrogen-containing basic compound (b), and ternary combinations of alkali (earth) metal compound (a), nitrogen-containing basic compound (b), and boric acid or borate ester (c).

Using a catalyst in the form of a combination of alkali (earth) metal compound (a) and nitrogen-containing basic compound (b) in such amounts is preferred because the polycondensation reaction can proceed at a fast pace, and a high-molecular-weight polycarbonate can be produced with high polymerization activity.

When alkali (earth) metal compound (a) and nitrogen-containing basic compound (b) are used together, or when alkali (earth) metal compound (a), nitrogen-containing basic compound (b), and boric acid or borate ester (c) are used together, a mixture of the catalyst components can be added to a molten mixture of bisphenols and carbonate diesters, or each catalyst component can be separately added to a molten mixture of bisphenols and carbonate diesters.

### Interface Method

Carbonyl halides, diaryl carbonates, and bishaloformate can be cited as examples of the carbonate precursors used in interface method (2). Any of these precursors can be used. Examples of carbonyl halides include carbonyl bromide, carbonyl chloride (so-called phosgene), and mixtures thereof. Examples of aryl carbonates include diphenyl carbonate, ditolyl carbonate, bis(chlorophenyl)carbonate, *m*-cresyl carbonate, dinaphthyl carbonate, and bis(diphenyl) carbonate. Examples of bishaloformates include bischloroformates and bisbromoformates of 2,2-bis(4-hydroxyphenyl)propane, 2,2-bis(4-hydroxy-3,5-dichlorophenyl)propane, hydroquinone, and other aromatic dihydroxy compounds, as well as bischloroformates and bisbromoformates of ethylene glycol and other glycols. Any of the aforementioned carbonate precursors can be used, although carbonyl chloride (so-called phosgene) is preferred.

In the interface method, the aforementioned aromatic dihydroxy compound is first dissolved or dispersed in an aqueous solution of caustic alkali, a solvent that makes the resulting mixture incompatible with water is added, and the reagents are brought into contact with a carbonate precursor such as phosgene under specified pH conditions in the presence of an appropriate catalyst. Methylene chloride, 1,2-dichloroethane, chlorobenzene, toluene, or the like is commonly used as the solvent incompatible with water. The catalyst used for the interface method is not subject to any particular limitations and is commonly a tertiary amine such as triethylamine, a quaternary phosphonium compound or a quaternary ammonium compound. The reaction temperature selected for the interface method is not subject to any particular limitations as long as this temperature allows the reaction to proceed. It is preferable, however, to set the temperature anywhere between room temperature (25°C) and 50°C.

The ends of the polycarbonate obtained by method (1) or (2) may be optionally blocked with specific functional groups.

The end blockers are not subject to any particular limitations and may include phenol, chroman-I, *p*-cumyl phenol, and other monohydric phenols.

### Polyester-based Resin (A-2)

The thermoplastic resin may also be a polyester-based resin.

Polyester-based resins (A-2) are widely known as such. It is possible, for example, to use a polyester of a diol (or an ester-forming derivative thereof) and a dicarboxylic acid (or an ester-forming derivative thereof). The compounds cited below can also be used as the diol and dicarboxylic acid components, either singly or as combinations of two or more compounds. These may also be combined with compounds having hydroxyl groups and carboxylic acid groups in their molecules, such as lactones.

Examples of suitable diol components include ethylene glycol, 1,2-propanediol, 1,3-propanediol, 1,4-butanediol, 2,3-butanediol, 1,6-hexanediol, 1,8-octanediol, neopentyl glycol, 1,10-decanediol, diethylene glycol, triethylene glycol, and other C₂-C₁₅ aliphatic diols. Ethylene glycol and 1,4-butanediol are the preferred aliphatic diols.

It is also possible to use 1,2-cyclohexanediol, 1,4-cyclohexanediol, 1,4-cyclohexanedimethanol, and other alicyclic diols. These alicyclic diols can have a *cis*- or *trans*-configuration, or be a mixture of the two. 1,4-cyclohexanedimethanol is the preferred alicyclic diol.

It is further possible to use resorcin, hydroquinone, naphthalenediol, and other aromatic divalent phenols; polyethylene glycol, polypropylene glycol, polytetramethylene glycol, and other polyglycols with molecular weights of 400-6000; and the bisphenols (bisphenol A and the like) described in JP (Kokai) 3-203956. The diol component may be a diacetate ester, dipropionate ester, or other diester.

Examples of dicarboxylic acid components include isophthalic acid, terephthalic acid, o-phthalic acid, 2,2'-biphenyldicarboxylic acid, 3,3'-biphenyldicarboxylic acid, 4,4'-biphenyldicarboxylic acid, 4,4'-diphenyletherdicarboxylic acid, 1,5-naphthalenedicarboxylic acid, 1,4-naphthalenedicarboxylic acid, 2,6-naphthalenedicarboxylic acid, 1,2-di(4-carboxyphenyl)ethane, and other aromatic dicarboxylic acids, as well as adipic acid, succinic acid, oxalic acid, malonic acid, suberic acid, azelaic acid, sebacic acid, decanedicarboxylic acid, cyclohexanedicarboxylic acid, and other aliphatic or alicyclic dicarboxylic acids. The acid components may also be ester derivatives such as methyl, ethyl, or other alkyl esters, or phenyl, cresyl, or other aryl esters.

Terephthalic acid and naphthalenedicarboxylic acid are the preferred dicarboxylic acids.

Caprolactone can be cited as an example of a lactone.

Such polyester-based resins can be produced by a conventional method. The catalyst used in the process may be an antimony compound, titanium compound, tin compound, germanium compound, or any other commonly employed catalyst, although antimony compounds, titanium compounds, tin compounds, and other nonvolatile catalysts are preferred because they can be added in smaller amounts.

The polyester-based resin should preferably be a polyester of an aromatic dicarboxylic acid and an alkylene glycol. Specific examples include polyethylene terephthalate, polybutylene terephthalate, polyethylene naphthalate, poly(1,4-cyclohexylene methylene terephthalate), poly(1,4-cyclohexylene methylene terephthalate-co-isophthalate), poly(1,4-butylene terephthalate-co-isophthalate), and poly(ethylene-co-1,4-cyclohexylene methylene terephthalate).

The polyester may be a single polyester-based resin or a combination of two or more such resins. Of these, combinations of polyethylene terephthalate (PET) and polybutylene terephthalate (PBT) are particularly preferred as such polyesters. A combination of 5-95 weight parts PBT and 95-5 weight parts PET is particularly preferred as this type of polyester.

### Silicone resin (B)

The silicone resin that constitutes component (B) in accordance with the present invention should preferably be a compound whose ends are blocked with the constituent units expressed by the following formula. 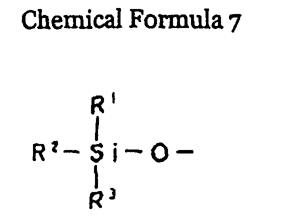 (where R¹-R³, which may be mutually identical or different, are alkyl, aryl, or alkylaryl groups).

Blocking the ends of the silicone resin with the constituent units expressed by the above formula makes it possible to obtain a molding in which the silicone resin is dispersed as flat particles in the area near the molding surface in the above-described manner.

The aforementioned constituent units are occasionally referred to as "units M" and expressed as R¹R²R³SiO_{0.5}.

The content of an OH residue relative to the total number of ends in the silicone resin used in accordance with the present invention should be 0.5 wt% or less, and preferably 0.3 wt% or less. In particular, a virtual absence of the OH residue is preferred.

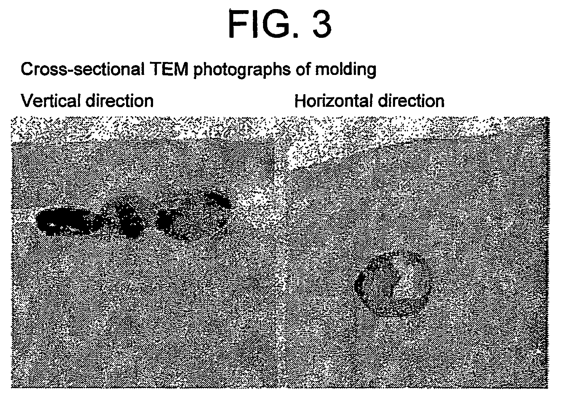

If the ends of the silicone resin contain OH groups in an amount greater than the aforementioned range (although these OH groups are believed to be polycondensed by the shear heat generated during extrusion or molding), a large mass such as that shown, for example, in Fig. 3 forms in the molding, the flame retardancy of the molding becomes inadequate, and the impact resistance of the molding sometimes decreases. Fig. 3 shows TEM photographs of cross sections of a molding obtained using a silicone resin having OH groups.

The silicone resin is not subject to any particular limitations in terms of containing other constituent units as long as the ends of the resin are blocked with the aforementioned constituent units.

The silicone resin may, for example, contain any of the [RSiO_{1.5}]T units, [R₂SiO_{1.0}]D units, and [SiO₂]Q units shown below.

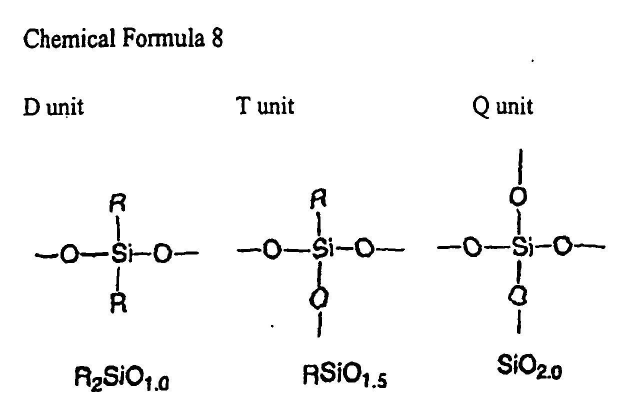

The organic groups R constituting the silicone resin may be the same or different. Specific examples include methyl, ethyl, propyl, butyl, and other alkyl groups; vinyl, allyl, and other alkenyl groups; and phenyl, tolyl, and other aryl groups.

With some of these organic groups R, the silicone resin is more easily available, better dispersibility in polycarbonate-based resins can be achieved, and flame retardancy can be improved. For this reason, silicone resins having methyl and/or phenyl groups as such organic groups R are particularly preferred. In the particular case of a silicone resin having phenyl groups, excellent flame retardancy can be attained, compatibility with polycarbonates can be improved, and better polycarbonate transparency can be ensured. The content of such phenyl groups should be 20 mol% or greater, and preferably 40 mol% or greater, in relation to the total amount of organic groups in the silicone resin.

The following silicone resins are preferred: silicone resins comprising siloxane units of the formula RSiO_{1.5} (T units) and siloxane units of the formula R₁R₂R₃SiO_{0.5} (M units); and silicone resins comprising T units, M units, and siloxane units of the formula SiO_{2.0} (Q units).

The weight-average molecular weight of the silicone resin should be kept low, such as, for example, 1000-50,000, preferably 2000-20,000, and ideally 3000-10,000. A silicone resin whose molecular weight falls within such a range tends to be more easily dispersed as bar-shaped particles, flat-plate particles, or other flat particles near the surface of a molding.

Such a silicone resin can be synthesized by a known method, such as one in which an organochlorosilane, organoalkoxysilane, or the like is hydrolyzed/condensed with excess water. Specifically, the following approach is preferred because of the fact that the molecular weight of the product can be easily controlled: a silane compound for forming constituent units is first hydrolyzed/condensed with water, a silicone resin containing silanol groups is produced, and the silanol groups are then blocked with the aforementioned constituent units, yielding the desired silicone resin.

According to a specific example of the method for manufacturing a silicone resin, a silicone resin containing silanol groups is reacted in an amount of 100 weight parts with 5-100 weight parts of a silicone compound (b) of the formula (R¹R²R³Si)ₐZ (where R¹-R³, which may be mutually identical or different, are alkyl, aryl, or alkylaryl groups; a is an integer from 1 to 3; Z is a hydrogen atom, halogen atom, hydroxyl group, or hydrolyzable group when *a* is 1; -O-, - NX-, or 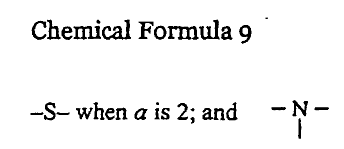 when a is 3; and X is a hydrogen atom or a C₁-C₄ monovalent hydrocarbon group).

The silicone resin containing silanol groups that constitutes component (a) can be synthesized by a known method, such as one in which an organochlorosilane, organoalkoxysilane, or the like is hydrolyzed/condensed with excess water. Such a reaction allows silicone resins having a variety of degrees of polymerization to be obtained by adjusting the amount of water, the type and amount of hydrolysis catalyst, the time and temperature of the condensation reaction, and the like. The silicone resin thus obtained commonly contains silanol groups (-SiOH).

The silicone compound of the formula (R¹₃Si)ₐZ that constitutes component (b) is obtained by the silylation of the silanol groups in component (a). Examples of the hydrolyzable group Z include methoxyl, ethoxyl, propoxyl, isopropoxyl, butoxyl, and other alkoxyl groups; chlorine, bromine, and other halogens; propenoxy and other alkenyloxy groups; acetoxy, benzoxy, and other acyloxy groups; acetone oxime, butanone oxime, and other organooxime groups; dimethylaminoxy, diethylaminoxy, and other organoaminoxy groups; dimethylamino, diethylamino, cyclohexylamino, and other organoamino groups; and *N*-methylacetamido and other organoamido groups.

Specific examples of component (b) include trimethylsilane, triethylsilane, and other hydrogen silanes; trimethylchlorosilane, triethylchlorosilane, triphenylchlorosilane, and other chlorosilanes; trimethylsilanol and other silanols; trimethylmethoxysilane, trimethylethoxysilane, and other alkoxysilanes; (CH₃)₃SiNHCH₃, (CH₃)₃SiNHC₂H₅, (CH₃)₃SiNH(CH₃)₂, (CH₃)₃SiNH(C₂H₅)₂, and other aminosilanes; (CH₃)₃SiOCOCH₃ and other acyloxysilanes; hexamethyldisilazane [(CH₃)₂Si]₂NH, 1,3-divinyltetramethyldisilazane, and other disilazanes; and nonamethyltrisilazane [(CH₃)₃Si]₃N and other trisilazanes. Of these, silazanes and chlorosilanes are preferred because they facilitate reaction control and allow unreacted products to be easily removed.

The reaction between components (a) and (b) can be performed under common conditions for silylating silanols.

For example, the reaction can be easily performed merely by mixing and heating components (a) and (b) when component (b) is a silazane or chlorosilane. The corresponding consumption of component (b) should preferably be 5-100 weight parts per 100 weight parts component (a). Using less than 5 weight parts of component (b) fails to adequately silylate the silanol groups of component (a), induces gelation during the reaction, and creates other problems. Using more than 100 weight parts of component (b) results in the wasteful use of starting materials because a large amount of unreacted component (b) is left over, and complicates the process because considerable time is needed to remove the unreacted component (b).

The aforementioned silylation reaction should preferably be performed in an organic solvent in order to control the reaction temperature and to inhibit dehydrocondensation as a side reaction. Examples of suitable organic solvents include toluene, xylene, hexane, industrial gasoline, mineral spirits, kerosene, and other hydrocarbon-based solvents; tetrahydrofuran, dioxane, and other ether-based solvents; and dichloromethane, dichloroethane, and other chlorinated hydrocarbon-based solvents. The reaction temperature is not subject to any particular limitations and can be anywhere between room temperature and 120°C. The hydrochloric acid, ammonia, ammonium chloride, alcohols, and other compounds produced by the reaction can be removed by rinsing, or distilled out concurrently with the solvent.

The silicone resin obtained by this method is commonly liquid or solid at room temperature.

The silicone resin to be added to the polycarbonate-based resin should preferably be solid because of its ability to be uniformly dispersed in the polycarbonate-based resin. Particularly preferable is a solid silicone resin with a softening point of 40°C or greater, and preferably 70-250°C.

It is also possible to adjust the softening point of the silicone resin material by mixing two or more silicone resins having different softening points.

The molecular weight of the material can be controlled by selecting the molecular weight of the silicone resin containing silanol groups and constituting component (a), the type of silanol groups to be silylated, and the type of component (b) constituting the silylation agent.

The amount in which the silicone resin is added to the flame-retardant resin composition should be 0.1-9 weight parts, and preferably 0.3-6 weight parts, per 100 weight parts of thermoplastic resin. Adding less than 0.1 weight part of silicone resin fails to endow the product with adequate flame retardancy, while adding more than 9 weight parts not only fails to result in a commensurate increase in flame retardancy but also has an adverse effect on the appearance, optical transparency, and strength of the resulting molding. The silicone resin does not produce noxious gases when burned.

### Drip Inhibitor (C)

The drip inhibitor used in the present invention can be a known additive designed to control dripping during burning. In particular, polycarbonate-based resins typified by polytetrafluoroethylene (PTFE) and provided with a fibril structure are preferred because of their pronounced drip-inhibiting effect.

Among such polytetrafluoroethylene (PTFE) materials, the following are preferred because of their ability to endow a molded polycarbonate composition with an excellent surface appearance: highly dispersible materials such as those obtained by emulsifying and dispersing PTFE in aqueous and other solutions, and materials in which PTFE is encapsulated in resins typified by polycarbonates and styrene/acrylonitrile copolymers.

When PTFE is emulsified and dispersed in an aqueous or other solution, the average particle diameter of PTFE, although not subject to any particular limitations, should still be kept at 1 µm (micron) or less, and preferably 0.5 µm (micron) or less.

Specific examples of products commercially available as such PTFE materials include Teflon 3oJ® (Mitsui-Dupont Fluorochemical), Polyflon D-2C® (Daikin Industries), and Aflon AD1® (Asahi Glass).

The drip inhibitor should be added in an amount of o.oi-io weight parts, preferably 0.05-2 weight parts, and ideally 0.1-0.5 weight part, per 100 weight parts of polycarbonate-based resin.

Adding component (C) in an amount below the aforementioned range fails to yield a highly flame-retardant polycarbonate composition, while adding more than the aforementioned range has an adverse effect on fluidity.

This type of polytetrafluoroethylene can be produced by a known method (see US Patent 2,393,967). Specifically, the polytetrafluoroethylene can be obtained as a white solid by a method in which a free-radical catalyst such as ammonium, potassium, or sodium peroxydisulfate is used, and tetrafluoroethylene is polymerized in an aqueous solvent at a pressure of 689-6895 KPa (100-1000 psi) and a temperature of 0-200°C, and preferably 20-100°C.

The polytetrafluoroethylene should have a molecular weight of 500,000 or greater, and preferably 1,000,000-50,000,000.

As a result, a resin composition containing this polytetrafluoroethylene has minimal dripping during burning. In addition, such joint use of polytetrafluoroethylene and silicone resin inhibits dripping even further and results in a shorter burning time than when polytetrafluoroethylene alone is added.

The present invention allows polyphenylene ether (PPE) to be used together with polytetrafluoroethylene as a drip inhibitor.

Polyphenylene ether-based resins are known as such and include homopolymers and/or copolymers whose units are expressed by formula (4) below. 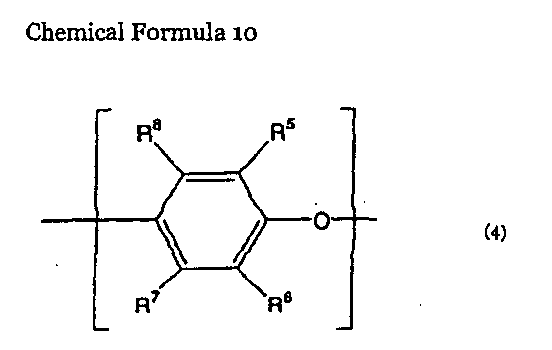 (where R⁵, R⁶, R⁷, and R⁸ are each independently selected from hydrogen atoms, halogen atoms, hydrocarbon groups, and substituted hydrocarbon groups (such as halogenated hydrocarbon groups)).

Specific examples of such PPEs include poly(2,6-dimethyl-1,4-phenylene)ether, poly(2,6-diethyl-1,4-phenylene)ether, poly(2-methyl-6-ethyl-1,4-phenylene)ether, poly (2-methyl-6-propyl-1,4-phenylene)ether, poly(2,6-dipropyl-1,4-phenylene)ether, poly(2-ethyl-6-propyl-1,4-phenylene)ether, poly(2,6-dimethoxy-1,4-phenylene)ether, poly(2,6-dichloromethyl-1,4-phenylene)ether, poly(2,6-dibromomethyl-1,4-phenylene)ether, poly (2,6-diphenyl-1,4-phenylene)ether, poly(2,6-ditolyl-1,4-phenylene)ether, poly(2,6-dichloro-1,4-phenylene)ether, poly(2,6-dibenzyl-1,4-phenylene)ether, and poly(2,5-dimethyl-1,4-phenylene)ether. Poly(2,6-dimethyl-1,4-phenylene)ether is particularly suitable as a PPE-based resin. In addition, examples of polyphenylene ether copolymers include copolymers obtained by partial incorporation of an alkyl-trisubstituted phenol such as 2,3,6-trimethylphenol into the aforementioned polyphenylene ether repeating units. Copolymers obtained by grafting styrene-based compounds to such polyphenylene ethers can also be used. Examples of polyphenylene ethers grafted with styrene-based compounds include copolymers resulting from the graft polymerization of styrene, *a* -methylstyrene, vinyltoluene, chlorostyrene, and other styrene-based compounds with the aforementioned polyphenylene ethers.

Inorganic drip inhibitors can also be used together with the aforementioned polytetrafluoroethylene as additional drip inhibitors. Examples of such inorganic drip inhibitors include silica, quartz, aluminum silicate, mica, alumina, aluminum hydroxide, calcium carbonate, talc, silicon carbide, silicon nitride, boron nitride, titanium oxide, iron oxide, and carbon black.

### Other Components

Depending on the objective, the flame-retardant resin composition of the present invention may contain thermoplastic resins other than polycarbonates as long as the physical properties of the composition are not compromised.

Examples of thermoplastic resins other than polycarbonates include styrene-based resins, aromatic vinyl/diene/vinyl cyanide-based copolymers, acrylic resins, polyester-based resins, polyolefin-based resins, polyphenylene oxide-based resins, polyester carbonate-based resins, polyetherimide-based resins, and methyl methacrylate/ butadiene/ styrene copolymers (MBS resins). It is also possible to use combinations of two or more resins.

Examples of styrene-based resins include polystyrene, poly(*a* -methylstyrene), and styrene/acrylonitrile copolymers (SAN resins).

Styrene/butadiene/acrylonitrile copolymers (ABS resins) can be cited as examples of aromatic vinyl/diene/vinyl cyanide-based copolymers.

Polymethyl methacrylate can be cited as an example of an acrylic resin.

Polyethylene terephthalate and polybutylene terephthalate can be cited as examples of polyester-based resins.

Examples of polyolefin-based resins include polyethylene, polypropylene, polybutene, polymethyl pentene, ethylene/propylene copolymers, and ethylene/propylene/diene copolymers.

Polyphenylene oxide resins can be cited as examples of polyphenylene oxide-based resins.

The hydrogens bonded to the benzene nucleus thereof may be substituted by alkyl groups or halogen atoms.

The other thermoplastic resin components should be added in an amount of 200 weight parts or less, and preferably 100 weight parts or less, per 100 weight parts of polycarbonate (A). Adding the other thermoplastic resin components in an amount greater than 200 weight parts sometimes has an adverse effect on the characteristics of the polycarbonate-based resin.

The flame-retardant resin composition of the present invention may also contain UV absorbers, hindered phenol-based antioxidants, phosphorus-based stabilizers and epoxy stabilizers.

### UV Absorbers

Examples of UV absorbers include benzotriazole-based UV absorbers, benzophenone-based UV absorbers, and salicylate-based UV absorbers.

Specific examples of benzotriazole-based UV absorbers include 2-(2'-hydroxy-5'-methylphenyl)benzotriazole, 2-(2'-hydroxy-5'-*t*-butylphenyl)benzotriazole, 2-(2'-hydroxy-5'-*t*-octylphenyl)benzotriazole, 2-(2'-hydroxy-3',5'-di-*t*-butylphenyl)benzotriazole, 2-(2'-hydroxy-3',5'-di-amylphenyl)benzotriazole, 2-(2'-hydroxy-3'-dodecyl-5'-methylphenyl)benzotriazole, 2-(2'-hydroxy-3',5'-dicumylphenyl)benzotriazole, and 2,2'-methylene bis[4-(1,1,3,3-tetramethylbutyl)-6-(2H-benzotriazol-2-yl)phenol]. Such benzotriazole-based UV absorbers are commercially available, for example, as UV5411 from American Cyanamid. The benzophenone-based UV absorbers are commercially available; for example, as UV531 from Cyanamid. Examples of salicylate-based UV absorbers include phenyl salicylate, *p-t*-butylphenyl salicylate, and *p*-octylphenyl salicylate.

These UV absorbers should be added in an amount of 0.01-10 weight parts, and preferably 0.05-5 weight parts, per 100 weight parts of polycarbonate-based resin.

### Phosphorus-based Stabilizers

Commercially available materials conventionally used as antioxidants can be used as phosphorus-based stabilizers without being subject to any particular limitations.

Specific examples include triphenyl phosphite, diphenylnonyl phosphite, tris(2,4-di-*t*-butylphenyl)phosphite, trisnonylphenyl phosphite, diphenylisooctyl phosphite, 2,2'-methylene bis(4,6-di-*t*-butylphenyl)octyl phosphite, diphenylisodecyl phosphite, diphenyl mono(tridecyl)phosphite, 2,2'-ethylidene bis(4,6-di-*t*-butylphenol)fluorophosphite, phenyldiisodecyl phosphite, phenyl di(tridecyl)phosphite, tris(2-ethylhexyl)phosphite, tris(isodecyl)phosphite, tris(tridecyl)phosphite, dibutyl hydrogen phosphite, trilauryl trithiophosphite, tetrakis(2,4-di-*t*-butylphenyl)-4,4'-biphenylene diphosphonite, 4,4'-isopropylidene diphenolalkyl (C₁₂-C₁₅) phosphite, 4,4'-butylidene bis(3-methyl-6-*t*-butylphenyl)di-tridecyl phosphite, bis(2,4-di-*t*-butylphenyl)pentaerythritol diphosphite, bis(2,6-di-*t*-butyl-4-methylphenyl)pentaerythritol diphosphite, bis(nonylphenyl)pentaerythritol diphosphite, distearyl-pentaerythritol diphosphite, phenol-bisphenol A pentaerythritol diphosphite, tetraphenyl dipropylene glycol diphosphite, 1,1,3-tris(2-methyl-4-di-tridecyl phosphite-5-*t*-butylphenyl)butane, and 3,4,5,6-tetrabenzo-1,2-oxaphosphan-2-oxide. Partial hydrolysates of these phosphites can also be used. Such phosphorus-based stabilizers are commercially available as Adeka Stab PEP-36, PEP-24, PEP-4C, PEP-8 (manufactured by Asahi Denka Kogyo), Irgafos 168® (manufactured by Ciba-Geigy), Sandstab P-EPQ® (manufactured by Sandoz), Chelex L® (manufactured by Sakai Chemical Industry), 3P2S® (manufactured by Ihara Chemical Industry), Mark 329K® (manufactured by Asahi Denka Kogyo), Mark P (same company) and Weston 618® (manufactured by Sanko Chemical Industry).

Such phosphorus-based stabilizers should be added in an amount of 0.0001-1 weight part, and preferably 0.001-0.5 weight part, per 100 weight parts of thermoplastic resin.

### Hindered Phenol-based Antioxidants

Specific examples of hindered phenol-based antioxidants include *n*-octadecyl-3-(3',5'-di-*t*-butyl-4-hydroxyphenyl)propionate, 2,6-di-*t*-butyl-4-hydroxymethylphenol, 2,2'-methylenebis(4-methyl-6-*t*-butylphenol), and pentaerythrityl-tetrakis[3-(3',5'-di-*t*-butyl-4-hydroxyphenyl)propionate]. These may be used singly or as combinations of two or more components.

Such hindered phenol-based stabilizers should be added in an amount of 0.0001-1 weight part, and preferably 0.001-0.5 weight part, per 100 weight parts of thermoplastic resin.

### Epoxy-based Stabilizers

The following materials can be used as epoxy-based stabilizers: epoxidated soybean oil, epoxidated linseed oil, phenylglycidyl ether, allylglycidyl ether, *t*-butylphenylglycidyl ether, 3,4-epoxycyclohexylmethyl-3',4'-epoxycyclohexyl carboxylate, 3,4-epoxy-6-methylcyclohexylmethyl-3',4'-epoxy-6'-methylcyclohexyl carboxylate, 2,3-epoxycyclohexylmethyl-3',4'-epoxycyclohexyl carboxylate, 4-(3,4-epoxy-5-methylcyclohexyl)butyl-3'4'-epoxycyclohexyl carboxylate, 3,4-epoxycyclohexyl ethylene oxide, cyclohexylmethyl-3,4-epoxycyclohexyl carboxylate, 3,4-epoxy-6-methylcyclohexylmethyl-6'-methylcyclohexyl carboxylate, bisphenol A diglycidyl ether, tetrabromobisphenol A glycidyl ether, diglycidyl ester of phthalic acid, diglycidyl ester of hexahydrophthalic acid, bis-epoxydicyclopentadienyl ether, bis-epoxyethylene glycol, bis-epoxycyclohexyl adipate, butadiene diepoxide, tetraphenyl ethylene epoxide, octyl epoxytallate, polybutadiene epoxide, 3,4-dimethyl-1,2-epoxycyclohexane, 3,5-dimethyl-1,2-epoxycyclohexane, 3-methyl-5-*t*-butyl-1,2-epoxycyclohexane, octadecyl-2,2-dimethyl-3,4-epoxycyclohexyl carboxylate, *N*-butyl-2,2-dimethyl-3,4-epoxycyclohexyl carboxylate, cyclohexyl-2-methyl-3,4-epoxycyclohexyl carboxylate, *N*-butyl-2-isopropyl-3,4-epoxy-5-methylcyclohexyl carboxylate, octadecyl-3,4-epoxycyclohexyl carboxylate, 2-ethylhexyl-3',4'-epoxycyclohexyl carboxylate, 4,6-dimethyl-2,3-epoxycyclohexyl-3',4'-epoxycyclohexyl carboxylate, 4,5-epoxytetrahydrophthalic anhydride, 3-*t*-butyl-4,5-epoxytetrahydrophthalic anhydride, diethyl-4,5-epoxy-*cis*-1,2-cyclohexyl dicarboxylate, and di-*n*-butyl-3-*t*-butyl-4,5-epoxy-*cis*-1,2-cyclohexyl dicarboxylate.

Such epoxy-based stabilizers should be added in an amount of 0.0001-5 weight parts, preferably 0.001-1 weight part, and ideally 0.005-0.5 weight part, per 100 weight parts of polycarbonate-based resin.

It is also possible to use stabilizers based on thiols and metal salts.

### Release Agents

Examples of release agents include methylphenyl silicone oil and other silicone-based release agents; pentaerythritol tetrastearate, glycerin monostearate, montanic acid wax, and other ester-based release agents; and poly(*a*-olefins) and other olefin-based release agents. Such release agents should be added in an amount of 0.01-10 weight parts, preferably 0.05-5 weight parts, and ideally 0.1-1 weight part, per 100 weight parts of polycarbonate-based resin.

Depending on the purpose, known additives such as colorants (carbon black, titanium oxide, and other pigments and dyes), fillers, reinforcing agents (glass fibers, carbon fibers, talc, clay, mica, glass flakes, milled glass, glass beads, and the like), lubricants, plasticizers, flame retardants, and flow improvers may also be added to the flame-retardant resin composition pertaining to the present invention during its mixing or molding, provided the physical properties of the resin are not compromised.

The resin composition can be produced by any known method, although melting and mixing methods are particularly preferred. Small amounts of solvents can be added during the production of the resin composition.

Extruders, Banbury mixers, rollers, and kneaders can be cited as particular examples of suitable equipment. These can be operated continuously or batchwise. No particular restrictions are imposed on the sequence in which the component are mixed.

### Production of Molding

Extrusion molding, injection molding, compression molding, or any other commonly employed molding method can be used to obtain the flame-retardant resin molding pertaining to the present invention.

In the particular case of the flame-retardant resin composition being molded by injection molding, the silicone resin can be dispersed as flat particles at least in the area near the surface of the molded flame-retardant resin, and a highly flame-retardant molding can be obtained.

The molding of the present invention has excellent impact resistance, high heat resistance, and superior flame retardancy. The molded resin composition of the present invention is therefore suitable for electronic/electrical device components and the shells and housings of OA equipment and consumer electronics.

### Effects of the Invention

The flame-retardant resin composition of the present invention has high flame retardancy without losing any of its impact resistance or moldability, and is highly beneficial for protecting the environment because the absence of flame retardants composed of chlorine compounds or bromine compounds. eliminates the risk that halogen-containing noxious gases will be produced by such flame retardants during burning.

Consequently, the resulting flame-retardant resin molding is highly suitable for use in the housings and components of television sets, printers, copiers, facsimile machines, personal computers, and other types of consumer electronics and OA equipment, as well as in transformers, coils, switches, connectors, battery packs, liquid crystal reflectors, automotive parts, construction materials, and other applications with stringent flame retardancy requirements.

### Working Examples

The present invention will now be described in further detail through working examples, but the present invention is not limited by these working examples.

Unless stated otherwise, the terms "parts" and "%" used in the working examples will refer to parts and percent by weight, respectively.

The following compounds were used as the corresponding components.
(1) Polycarbonate-based Resin (PC)
   Polycarbonate of bisphenol A: LEXAN® (manufactured by Plastics Japan); intrinsic viscosity in methylene chloride at 25°C: 0.42 dL/g; viscosity-average molecular weight (Mv): 18,000 (calculated value)
(2) Polytetrafluoroethylene (PTFE)
   Polyflon D-2C® (manufactured by Daikin Industries); emulsion/dispersion of PTFE in water; PTFE content: 60%. The actual PTFE addition was 0.49% because Polyflon D-2C was added to the polycarbonate-based resin in an amount of 0.82%. Water vaporized when the resin composition was prepared.
(3) Silicone Resins
   Silicone resins whose compositions are shown in Table 1 were used.
   Silicone resin (A-1) consisted of T and M units; all the R¹-R³ in the M units (R¹R²R³SiO_{0.5}) were methyl groups; the R's in the T units (RSiO_{1.5}) were methyl or phenyl groups; the molar ratio of phenyl and methyl groups in the T units was 65/35; the content of Si-OH residue (silanol group residue) was found to be o on the basis of IR absorbance data; and the weight-average molecular weight of the resin was 5500.

Silicone resin (B-1) consisted of T units; the R's in the T units (RSiO_{1.5}) were methyl or phenyl groups; the molar ratio of phenyl and methyl groups in the T units was 65/35; the content of Si-OH residue (silanol group residue) was found to be 0.0436 on the basis of IR absorbance data; and the weight-average molecular weight of the resin was 5800.

**Table 1**

| | **Weight-average molecular weight** | **Constituent units** | **Ph/Me***^{**1)**} | **OH residue***^{**2)**} | **Softening point (°C)** |
|---|---|---|---|---|---|
| **Silicone resin (A-1)** | 5500 | T and M | 65/35 | 0 | 90 |
| **Silicone resin (B-1)** | 5800 | T | 65/35 | 0.0436 | 90 |

| | | | | | |
|---|---|---|---|---|---|
| 1) "Ph/Me" is the molar ratio of phenyl and methyl groups. | | | | | |
| 2) The OH residue was identified by employing an IR (infrared absorption spectrum) method for measuring OH residue absorbance (in the vicinity of 3680 cm⁻¹). | | | | | |

### Working Example 1

A mixture was prepared from 100 weight parts polycarbonate, 2 weight parts silicone resin (A-1), 0.49 weight part PTFE, and 0.045 weight part phosphorus-based stabilizer tris(2,4-di-*t*-butylphenyl)phosphite; Irgafos 168®, manufactured by Ciba-Geigy); the mixture was extruded from a twin-screw extruder at a rotational screw speed of 270 rpm and a barrel temperature of 280° C; and the extrudate was cut into pellets of prescribed length. The pellets were injection-molded with the aid of a 100-t injection-molding machine at a barrel temperature of 280°C and a mold temperature of 80°C, yielding a specimen measuring 125 × 13 × 1.6 mm. The resulting molding was tested for flame retardancy.

TEM photographs of cross sections of the resulting molding were taken. The results are shown in Fig. 1.

The silicone resin was scattered in the area near the surface of the resulting molding as flat-plate particles whose thickness along the minor axis was 5-40 nm.

The molding was tested for flame retardancy according to UL-94. Specifically, the molding was tested in accordance with the test method described in Bulletin 94 "Combustion Testing for Classification of Materials" (hereinafter referred to as "UL-94") of the Underwriters Laboratories, Inc.

Specifically, vertically oriented specimens were brought into contact with a burner flame for 10 seconds, and the burning time was measured. Five specimens, each subjected to two flame applications, were tested, and the following parameters were evaluated: the combined burning time after ten flame applications, the burning time after a single flame application, and the dripping of flaming particles. The following rankings were assigned on the basis of this evaluation. The purpose of the present working example was to determine whether the molding conformed to the V-0 classification.

V-0: The combined burning time of five ignited specimens (ten flame applications) is within 50 seconds, the burning time following a single flame application is within 10 seconds, and none of the specimens drip flaming particles capable of igniting degreased cotton.

V-1: The combined burning time of five ignited specimens (ten flame applications) is within 250 seconds, the burning time following a single flame application is within 30 seconds, and none of the specimens drip flaming particles capable of igniting degreased cotton.

V-2: The combined burning time of five ignited specimens (ten flame applications) is within 250 seconds, the burning time following a single flame application is within 30 seconds, and all the specimens drip flaming particles capable of igniting degreased cotton.

The results are shown in Table 2.

### Comparative Example 1

Apart from the fact that silicone resin (B-1) was used instead of silicone resin (A-1), the same procedure as in Working Example 1 was used to fabricate a molding, and flammability tests were carried out.

TEM photographs of cross sections of the resulting molding were taken. The results are shown in Fig. 1.

The silicone resin was present as a mass measuring about 1 µm in the area near the surface of the molding.

The molding was tested for flame retardancy according to UL-94 in the same manner as in Working Example 1.

The results are shown in Table 2.

**Table 2**

| | | **Working Example 1** | **Comparative Example 1** |
|---|---|---|---|
| **Composition (parts)** | **Polycarbonate** | 100 | 100 |
| | **Silicone resin (A-1)** | 2 | |
| | **Silicone resin (B-1)** | | 2 |
| | **PTFE** ^{**1)**} | 0.49 | 0.49 |
| **Flammability test** | **Combined burning time (seconds)**^{**2)**} | 16 | 72 |
| | **Drip number**^{**3)**} | 0 | 1 |
| | **Conformance with UL94 V-0** | Pass | Fail |

| | | | |
|---|---|---|---|
| 1) For PTFE, the amount of PTFE without water or the like is indicated. | | | |
| 2) "Combined burning time" is the combined mean burning time of five specimens. | | | |
| 3) "Drip number" is the number of specimens (out of five specimens) whose dripping ignited the degreased cotton. | | | |

It can be seen in Table 2 that a molding in which a silicone resin was dispersed as flat particles at least in the area near the surface had a short burning time, minimal dripping, and high flame retardancy (UL-94 V-0).

## Claims

1. A flame-retardant resin molding, composed of a flame-retardant resin composition containing thermoplastic resin (A) and silicone resin (B), wherein said molding is **characterized in that**
the silicone resin (B) is dispersed as flat particles at least in the area near the surface of the molding wherein the ratio of length along the major axis and length along the minor axis of the flat particles is 5 or greater, and the thickness of the flat particles along the minor axes thereof is 1-100 nm.

2. A flame-retardant resin molding according to claim 1, **characterized in that** the thermoplastic resin (A) is a polycarbonate-based resin.

3. A flame-retardant resin molding according to claim 1 or claim 2, **characterized by** being composed of a flame-retardant resin composition containing drip inhibitor (C) together with thermoplastic resin (A) and silicone resin (B).

4. A flame-retardant resin molding according to claim 3, **characterized in that** the drip inhibitor (C) is polytetrafluoroethylene (PTFE).

5. A flame-retardant resin molding according to any of claims 1-4, **characterized in that** the ends of the silicone resin are blocked with the constituent units expressed by the following formula 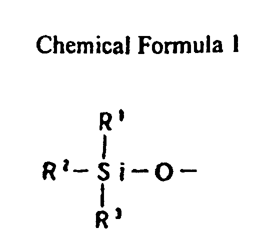 (where R¹-R³, which may be mutually identical or different, are alkyl, aryl, or alkylaryl groups).

6. An electrical/electronic device component, composed of a flame-retardant resin molding according to any of claims 1-5.

7. A housing, composed of a flame-retardant resin molding according to any of claims 1-5.

## Patentansprüche

1. Ein flammhemmendes Kunststoff-Formteil bestehend aus einer flammhemmenden Harzzusammensetzung enthaltend thermoplastisches Harz (A) und Silikonharz (B), wobei das Formteil **dadurch gekennzeichnet ist, dass**
das Silikonharz (B) zumindest im Bereich nahe der Oberfläche des Formteils als flache Partikel verteilt ist, wobei das Verhältnis der Länge entlang der Hauptachse und Länge entlang der Nebenachse der flachen Partikel 5 oder größer ist, und die Dicke der flachen Partikel entlang ihrer Nebenachse 1 - 100 nm ist.

2. Ein flammhemmendes Kunststoff-Formteil gemäß Anspruch 1, **dadurch gekennzeichnet, dass** das thermoplastische Harz (A) ein auf Polycarbonat basierendes Harz ist.

3. Ein flammhemmendes Kunststoff-Formteil gemäß Anspruch 1 oder Anspruch 2, **dadurch gekennzeichnet, dass** es aus einer flammhemmenden Zusammensetzung besteht, die einen Tropf-Inhibitor (C ) zusammen mit einem thermoplastischen Harz (A) und Silikonharz (B) enthält.

4. Ein flammhemmendes Kunststoff-Formteil gemäß Anspruch 3, **dadurch gekennzeichnet, dass** der Tropf-Inhibitor (C ) Polytetrafluorethylen (PTFE) ist.

5. Ein flammhemmendes Kunststoff-Formteil gemäß einem der vorhergehenden Ansprüche 1 bis 4, **dadurch gekennzeichnet, dass** die Enden des Silikonharzes geblockt sind mit konstituierenden Einheiten ausgedrückt durch die folgende Formel 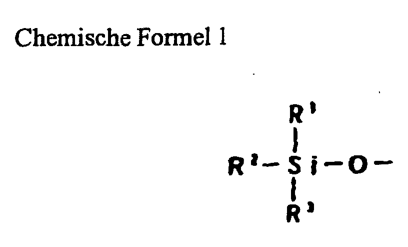 (worin R¹ - R³, die gegenseitig gleich oder verschieden sein können, Alkyl, Aryl oder Alkylarylgruppen sind).

6. Eine elektrische/elektronische Gerätekomponente, bestehend aus einem flammhemmenden Kunststoff-Formteil gemäß einem der Ansprüche 1 - 5.

7. Ein Gehäuse, bestehend aus einem flammhemmenden Kunststoff-Formteil gemäß einem der Ansprüche 1- 5.

## Revendications

1. Pièce moulée en résine à inflammation freinée, constituée d'une composition pour résine à inflammation freinée, contenant une résine thermoplastique (A) et une résine de silicone (B), ladite pièce moulée étant **caractérisée en ce que** la résine de silicone (B) est dispersée sous la forme de particules plates au moins dans la zone proche de la surface de la pièce moulée, le rapport de la longueur suivant l'axe majeur à la longueur suivant l'axe mineur des particules plates étant supérieur ou égal à 5 et l'épaisseur des particules plates suivant leurs axes mineurs étant de 1 à 100 nm.

2. Pièce moulée en résine à inflammation freinée selon la revendication 1, **caractérisée en ce que** la résine thermoplastique (A) est une résine à base de polycarbonate.

3. Pièce moulée en résine à inflammation freinée selon la revendication 1 ou 2, **caractérisée en ce qu'**elle est constituée d'une composition pour résine à inflammation freinée, qui contient un inhibiteur de dégouttement (C) avec la résine thermoplastique (A) et la résine de silicone (B).

4. Pièce moulée en résine à inflammation freinée selon la revendication 3, **caractérisée en ce que** l'inhibiteur de dégouttement (C) est du polytétrafluoroéthylène (PTFE).

5. Pièce moulée en résine à inflammation freinée selon l'une quelconque des revendications 1 à 4, **caractérisée en ce que** les extrémités de la résine de silicone sont bloquées par des motifs constitutifs de formule chimique I suivante : 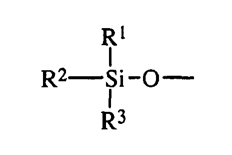 dans laquelle R¹ à R³, qui peuvent être identiques ou différents, représentent chacun un groupe alkyle, aryle ou alkylaryle.

6. Composant d'appareil électrique ou électronique, qui est constitué d'une pièce moulée en résine à inflammation freinée selon l'une quelconque des revendications 1 à 5.

7. Logement constitué d'une pièce moulée en résine à inflammation freinée selon l'une quelconque des revendications 1 à 5.
